# EUROPEAN PATENT APPLICATION

(11) **EP 3 193 148 A1**
(43) Date of publication of application: **19.07.2017**
(21) Application number: 16184691.0
(22) Date of filing: 18.08.2016
(51) Int. Cl.: G01L 19/06, G01L 19/14, G01L 9/00

(54) **PRESSURE SENSOR**

(71) Applicant: Siemens Aktiengesellschaft, 80333 München (DE)
(72) Inventor: Eastoe, Andrew Robert, 5427 Urangsvaeg (NO); Haugland, Bjoern-Aksel, 5428 Foldroeyhamn (NO)

(57) **Abstract**

A pressure sensor, in particular for a subsea application, is provided. The pressure sensor comprises a process interface (10) for receiving a process fluid, the pressure sensor (100) being mountable at the process interface (10) to a process fluid carrying component, and at least two parts (11, 12, 20, 21) that are exposed to the process fluid when the process fluid is received at the process interface, wherein seals between the at least two parts (11, 12, 20, 21) that confine the process fluid within the pressure sensor comprise a weld (41, 42, 43).

## Description

### Field of the invention

The present invention relates to a pressure sensor, in particular for a subsea application, and to a method of assembling a pressure sensor.

### Background

Several applications are known to benefit from the measurement of pressure, in particular in the field of hydrocarbon production and processing. Examples include the measurement of pressure in a line transporting hydrocarbons produced from a well. Other applications comprise pressure measurements in a line supplying water or chemicals for injection into a well, or hydraulic lines that supply hydraulic fluid at high pressure. Such applications have in common that the process fluid transported in such line can have a significant pressure, and may further have a high temperature. For example, a pressure in excess of 1,000 bar can be present in such line. In addition, for example for chemical lines or hydraulic lines, the properties of the process fluid transported in such line may be detrimental to certain materials and components. Particular problems arise in subsea applications, where the sensors are exposed to a corrosive subsea environment and in which such equipment is difficult to service and is required to have a long lifetime, often in excess of 25 years.

Subsea sensors are known and can be used to measure pressure, for example differential pressure, at subsea production facilities. Examples are described in the document WO 2015/003856 A1 or the document WO 2015/003857 A1.

It is desirable to provide a pressure sensor that can handle harsh environments and excessive pressures, for example pressures in excess of 500 or even 800 or 1,000 bar. It is further desirable to provide a pressure sensor that has a long lifetime and that has a high degree of reliability. It is further desirable to be capable of employing such sensor in a subsea environment, for example at water depth of up to or even in excess of 3,000m.

### Summary

Accordingly, there is a need for an improved pressure sensor that obviates at least some of the drawbacks mentioned above. In particular, there is a need for a pressure sensor which is capable of withstanding high pressures of the process fluid.

This need is met by the features of the independent claims. The dependent claims describe embodiments of the invention.

An embodiment according to the invention provides a pressure sensor, in particular for a subsea application. The pressure sensor comprises a process interface for receiving a process fluid, the pressure sensor being mountable at the process interface to a process fluid carrying component, such as a piece of pipe or part of a Christmas tree or the like. The pressure sensor further comprises at least two parts that are exposed to the process fluid when the process fluid is received at the process interface. The seals between the at least two parts that confine the process fluid within the pressure sensor comprise a weld.

Accordingly, the process fluid may be confined within the pressure sensor by high integrity seals that are capable of withstanding significant pressures and temperatures, as well as corrosive environments. In particular, the seals may be formed as welds; the weld provides the sealing. All seals that confine the process fluid in the pressure sensor may be provided as welds. In some embodiments, additional seals may be provided (for example an O-ring seal to seal a connection prior to welding). In some embodiments, the seal may consist of the weld. The pressure sensor may thus provide a fully welded configuration for confinement of the process fluid. The pressure sensor may thus be suitable for use in high pressure/high temperature applications and/or with corrosive or otherwise damaging fluids.

As an example, in some embodiments, the at least two parts may comprise a mount and a sensor element, the sensor element being welded to the mount. In other embodiments, the pressure sensor may comprise further parts that can be arranged and sealed to each other by welds to confine the process fluid entering the pressure sensor at the process interface.

Process fluid is the fluid the pressure of which is to be measured; it is not restricted to any particular type of fluid. Preferably, it is a liquid, such as chemicals transported in a line, hydraulic liquid, water or hydrocarbons. It may be a fluid including multiple phases, such as hydrocarbons produced from a well including gas and liquid components, and potentially solid components.

In an embodiment, the at least two parts comprise a sensor module housing providing support for a sensor element of the pressure sensor and an adaptor housing, wherein the adaptor housing is sealed to the sensor module housing by a weld. In such configuration, the process fluid may be confined to within a particular section of the pressure sensor, preventing that other parts are exposed to the process fluid. For example, the sealing may be such that the process fluid cannot enter the sensor module housing.

The adaptor housing may comprise a through-bore with a shoulder. The sensor module housing may partly extend into the through bore and abut the shoulder such that a pressure applied by the process fluid presses the sensor module housing against the shoulder. A secure and reliable connection between the adaptor housing and the sensor module housing may thus be achieved.

In an embodiment, the at least two parts comprise at least an adaptor housing and an adaptor piece. The adaptor piece may be sealed to the adaptor housing by a weld. The adaptor piece may for example allow the mounting of the pressure sensor in different applications, the adaptor piece being selected in accordance with the respective application. Further, by means of the weld, the confinement of the process fluid by seals in form of welds may be ensured. The adaptor piece may comprise a connecting face adapted to be welded to the process fluid carrying component. An environment that is fully sealed by welds may thus be provided for the process fluid.

In an embodiment, the adaptor piece and/or the adaptor housing may provide the interface for receiving the process fluid. The adapter piece may for example comprise a flow channel through which the process fluid may be led into a chamber formed in the adaptor piece, or to a different location within the pressure sensor.

In an embodiment, the adapter piece seals the through bore in the adaptor housing such that a volume is formed between the adaptor piece and the sensor module housing within the adaptor housing. The volume may be configured to receive the process fluid through the adaptor piece.

The adaptor housing may have a second shoulder which the adaptor piece abuts. The first and the second shoulders may be spaced apart so as to provide the desired spacing between the adaptor piece and the sensor module housing within the adaptor housing, thereby forming the volume or chamber into which the process fluid can be led.

In an embodiment, the at least two parts comprise a sensor module housing. The pressure sensor may further comprise a sensor element, wherein the sensor element is sealed to the sensor module housing by a weld. Accordingly, pressure that is applied to the sensor element can be confined efficiently, allowing the use of the pressure sensor with high pressures.

The sensor element may provide separation between an environment to which the pressure of the process fluid is applied (which may be the process fluid itself or for example a pressure transfer fluid) and an environment in which connections to the sensor element are provided. In such configuration, the connections are not exposed to the high pressure of the process fluid and no feed-throughs may be required for such connections.

In particular, the sensor element may have a first side exposed to the process fluid or a pressure transfer fluid and a second side opposite the first side, wherein a sensor unit, in particular a strain sensing element, may be mounted to the second side. The sensor unit provides the pressure measurement, for example by measuring deformation or strain of the sensor element with electrical or optical means. The second side of the sensor element may accordingly not be exposed to the process fluid or pressure transfer fluid. It may for example be located within an atmospheric chamber of the pressure sensor.

In an embodiment, the pressure sensor has no electrical or optical feed-through into the environment to which the process pressure of the process fluid is applied (directly or indirectly). Accordingly, since no feed-through is required, the reliability may be improved since a further leakage path is eliminated. Even further, a fully welded confinement for the process pressure may be established, and the sensor may be enabled to handle high or very high pressures, for example in excess of 500, 800 or even 1,000 bar.

In an embodiment, the pressure sensor further comprises a process diaphragm, wherein the at least two parts comprise a sensor module housing and wherein the process diaphragm is welded to the sensor module housing, in particular to a diaphragm support housing forming part thereof, wherein the process diaphragm provides separation between the process fluid and a pressure transfer fluid inside the pressure sensor. The pressure may thus be transferred efficiently from the process fluid to the pressure transfer fluid. The sensor module housing may be provided with a diaphragm bed which is configured to act as a mechanical seat for the diaphragm. Accordingly, in situations in which the pressure of the process fluid exceeds the pressure rating of the pressure sensor or the diaphragm, deformation of the diaphragm is limited by the diaphragm bed, thus preventing damage to the diaphragm. The mechanical seat may be provided in form of a concave face on the sensor module housing over which the diaphragm is welded to the sensor module housing. A hole may be provided in such face to allow pressure transfer medium to enter and leave the space between the diaphragm and the diaphragm bed.

For example, the sensor module housing may comprise a diaphragm support housing on which the diaphragm bed is provided and to which the diaphragm is welded.

In an embodiment, the pressure sensor further comprises a pressure transfer assembly for transferring a pressure applied by the process fluid to a sensor element of the pressure sensor via a pressure transfer fluid. Accordingly, the sensor element may not be exposed directly to the process fluid, and a more flexible placement of the sensor element becomes possible, it may for example be spaced further apart from the elements of the pressure sensor that are in contact with the process medium. Transfer of thermal energy and exposure to the process medium may thereby be controlled.

The at least two parts may for example comprise a sensor module housing, wherein the sensor module housing provides the pressure transfer assembly and wherein the pressure transfer assembly comprises channels filled with the pressure transfer fluid for transmitting a pressure applied to a process diaphragm to the sensor element. The process diaphragm may be configured as indicated above.

In an embodiment, seals that seal the pressure transfer fluid within the pressure sensor are formed as welds. Accordingly, the high pressures that are transferred from the process medium to the pressure transfer medium may be efficiently confined within the pressure transfer assembly. In particular, by providing seals in form of welds, the lifetime and long term stability of the pressure sensor may be improved, and the reliability may be increased. The risk for the occurrence of leaks of the process fluid or the pressure transfer fluid may be reduced.

In particular, the volume within the pressure sensor comprising the pressure transfer fluid may be sealed entirely by means of welds. Any seals that seal the pressure transfer fluid within the pressure sensor may be formed as welds.

In an embodiment, the pressure transfer assembly comprises a port for filling the pressure transfer assembly with the pressure transfer fluid. The port may be sealed by a seal, one side of the seal being exposed to the pressure transfer fluid, the other side of the seal being exposed to a pressure applied to the process interface. The other side of the seal may for example be directly exposed to the process medium. Accordingly, there is almost no pressure difference across the seal, keeping the forces applied to the seal relatively low. The seal may for example be formed by welding. In particular, the seal may be provided by a ball, such as a metal or steel ball, which is welded to the port. The seal may thus be capable of resisting potential damaging effects of the process fluid.

In an embodiment, the at least two parts comprise a sensor module housing, wherein the sensor module housing comprises a diaphragm support housing to which a process diaphragm is mounted and a sensor support housing to which a sensor element is mounted. The diaphragm support housing and the sensor support housing may be spaced apart and may be connected by a housing section providing a flow channel for the pressure transfer fluid. The housing section may be a pipe section, or an elongated housing section with a through hole. The housing section may be integral with one or both of the diaphragm support housing and the sensor support housing. The housing section may be a separate element that is sealed to one or both of these housing parts by means of a weld. A pipe section may for example be welded to the diaphragm support housing and the sensor support housing.

In an embodiment, the pressure sensor further comprises a temperature probe. The temperature probe may be located in the sensor module housing, in particular in a diaphragm support housing of the pressure sensor.

The temperature prove may be configured to measure the temperature within the pressure transfer assembly, for example within the diaphragm support housing of the sensor module housing, in particular in proximity to the process diaphragm. Effects that may be caused by a temperature dependent expansion and contraction of the pressure transfer medium may thus be compensated efficiently.

In an embodiment, the pressure sensor further comprises a sensor housing, wherein the sensor housing is sealed against at least one of the at least two parts to provide an inner chamber sealed against both the process fluid and an ambient medium. The sensor housing may be a pressure resistant subsea housing. The sensor housing may comprise one or more penetrators for leading an electrical and/or optical connection into the inner chamber and sealing the inner chamber. The sensor housing may provide a second barrier between the process fluid and the ambient medium surrounding the sensor housing. For example if a seal that confines the pressure of the process fluid of the pressure transfer fluid on the sensor module housing fails, the respective fluid and pressure may then be confined within the sensor housing, the inner chamber being sealed by the penetrators.

The penetrators may for example comprise glass to metal seals for feeding the electrical connection into the chamber. Such seals may be capable of withstanding significant pressure differences, for example in excess of 300 bar.

For example, a seal between the adaptor housing or the sensor module housing and the sensor housing can be provided by a weld.

The sensor housing may be configured to maintain a predefined internal pressure when deployed subsea, in particular a pressure below 10 bar, below 5 bar or below or about 1.5 bar. The pressure in the inner chamber may be about atmospheric pressure. The inner chamber may be gas filled, in particular nitrogen filled or air filled.

In an embodiment, the pressure sensor further comprises a sensor element, the sensor element comprising at least two sensor units mounted to the back of the sensor element. The two sensor units may for example be two strain sensors. Each sensor unit may provide an output indicative of a pressure applied by the process fluid at the process interface. For example, the pressure applied by the process fluid at the process interface may be transferred to the sensor element (directly or indirectly via a pressure transfer medium), and the deformation of the sensor element may be measured by the two strain sensors mounted to the backside of the sensor element. The sensor units, such as the strain sensors, may thus not be exposed to the high process pressures.

Redundant pressure measurement and thus redundant pressure sensors may accordingly be thus be provided. If one of the sensor units fails, the pressure sensor can continue to provide pressure readings. Reliability and lifetime of the pressure sensor may accordingly be increased.

In an embodiment, the pressure sensor further comprises a sensor housing, wherein the sensor housing is sealed against at least one of the at least two parts to provide an inner chamber, wherein the inner chamber comprises for each sensor unit at least one electric unit providing power and/or communication for the respective sensor unit. Accordingly, if one of the electric unit fails, the pressure sensor can still continue to operate.

As an example, the electric unit for each sensor unit may comprise a power supply and a communication module. These may be provided on the same circuit board or on different circuit board. As an example, the inner chamber may comprise four circuit boards, two for the power supply for the two sensor units and two for providing communication/data processing for the two sensor units.

In an embodiment, the pressure sensor may has dual pressure outputs. In particular, it may be configured to provide two independent pressure readings. These can for example be taken from the independent sensor units which are powered by independent power supply and communication modules or units. Accordingly, two fully independent pressure measurements may be obtained from the pressure sensor.

The electric unit may be provided as a module that is mounted to the end of the sensor module housing that is located within the inner chamber. A snap connection may be provided to snap the electric unit onto the back of the sensor module housing.

According to a further embodiment of the invention, a method of assembling a pressure sensor, preferably for a subsea application, is provided. The method comprises the steps of providing a process interface for receiving a process fluid, the pressure sensor being mountable to a process fluid carrying component at the process interface; providing at least two parts of the pressure sensor that are exposed to the process fluid when the process fluid is received at the process interface; and sealing the at least two parts by welding the at least two parts together so that seals that confine the process fluid within the pressure sensor comprise a weld.

By such method, advantages similar to the ones outlined further above with respect to the pressure sensor may be achieved. Further, the method may facilitate assembly of the pressure sensor and may further allow testing of the seals provided in form of the welds during assembly.

In an embodiment of the method, providing the at least two parts comprises providing an adaptor housing and a sensor module housing. The method may further comprise inserting the sensor module housing into a through hole of the adaptor housing such that the sensor module housing rests on a shoulder in the through hole; welding the sensor module housing to the adaptor housing; inserting a adaptor piece into the through hole so as to form a chamber between the sensor module housing and the adaptor piece in the adaptor housing; and welding the adaptor piece to the adaptor housing.

The adapter piece may provide the interface at which the process fluid is received, it may for example comprise a flow channel through which the process fluid can enter a chamber formed within the adapter housing. At this process interface, a test pressure may be applied and the seals, in particular the welds, that confine the process fluid within the pressure sensor may be tested efficiently, up to the rated pressure or a predetermined test pressure.

The method may comprise further steps, in particular the steps described further above with respect to embodiment of the pressure senor. In particular, the method may comprise steps to assemble a pressure sensor in any of the configurations described herein.

A further embodiment provides a pressure sensor having a process interface for receiving a process fluid and a pressure transfer assembly for transferring the pressure of the process fluid via a pressure transfer fluid to a sensor element. In an embodiment, seals that confine the pressure applied by the pressure transfer fluid may be formed by or consist of welds. In another embodiment, seals that confine the pressure transfer fluid within the pressure transfer assembly may be formed by or consist of welds.

A further embodiment provides a pressure sensor having a process interface for receiving a process fluid and a sensor element to which a pressure of the process fluid is directly or indirectly applied. The pressure sensor may further include at least two sensor units attached to a side of the sensor element that is not exposed to the pressure of the process fluid. The sensor units may be configured to measure a strain or deformation of the sensor element caused by application of the pressure to the sensor element. The sensor units may in particular be (electrical or optical) strain sensors. In such configuration, no electrical or optical feedthroughs into the region that is exposed to the pressure of the process fluid are required, and the sensor units are not exposed to the process pressure. Further, lifetime and reliability of the sensor may be improved since the sensor can continue operation even if one sensor unit fails.

The embodiments of the pressure sensors may be combined with the features of the pressure sensor described further above, the features taken in isolation or in combination, unless noted to the contrary.

It is to be understood that the features mentioned above and those yet to be explained below can not only be used in the respective combinations indicated, but also in other combinations or in isolation without leaving the scope of the present invention.

### Brief description of the drawings

The foregoing and other features and advantages of the invention will become further apparent from the following detailed description read in conjunction with the accompanying drawings. In the drawings, like reference numerals refer to like elements.
Figure 1 is a schematic drawing showing a sectional side view of a pressure sensor according to an embodiment of the invention.
Figure 2 is a schematic drawing showing a sectional side view of a pressure sensor according to an embodiment of the invention.
Figure 3 is a schematic drawing showing a sectional side view of a pressure sensor according to an embodiment of the invention.

### Detailed description

In the following, embodiments of the invention will be described in detail with reference to the accompanying drawings. It is to be understood that the following description of the embodiments is given only for the purpose of illustration and is not to be taken in a limiting sense. The drawings are to be regarded as being schematic representations only, and elements in the drawings are not necessarily to scale with each other. Rather, the representation of the various elements is chosen such that their function and general purpose become apparent to a person skilled in the art. Elements shown in the drawings are not necessarily to scale with each other. In some embodiment, the elements in the drawings are to scale with each other.

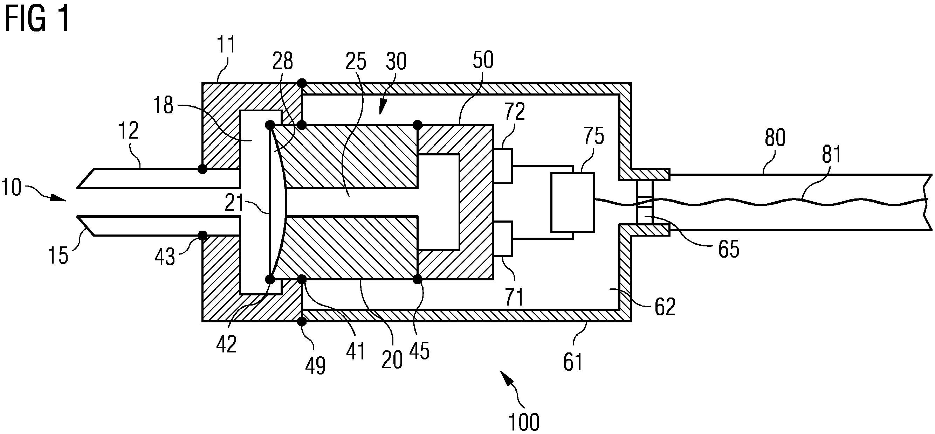

Figure 1 shows a schematic drawing of a pressure sensor 100, which is a subsea pressure sensor capable to be operated in a subsea environment. The pressure sensor 100 has a process interface 10 which at which it is connectable to a process fluid carrying component, such as a pipe section, a flow duct, a device in which the process fluid is present, such as a reservoir or the like. A chemical line pressure or a process pressure may for example be collected at the process interface 10.

The pressure sensor has at least two parts that are mounted together and that provide the process interface 10. In the example of figure 1, the at least two parts are mounted together to confine a volume 18 that is in flow communication with the process interface 10 and into which the process fluid flows. The at least two parts comprise in the embodiment of figure 1 the adapter housing 11 and the adapter piece 12. They may further comprise the sensor module housing 20 and the process diaphragm 21.

The at least two parts are sealed to each other such that the process fluid is confined within the pressure sensor 100, in particular within the volume 18 and the flow channels leading to the volume 18.

The seals that confine the process fluid comprise welds, they may consist of welds. In particular, the process diaphragm 21 is sealed to the sensor module housing 20 by weld 42, the adaptor housing 11 is sealed to the sensor module housing 20 by weld 41, and the adaptor piece 12 is sealed to the adaptor housing 11 by weld 43. Accordingly, all seals that confine the process fluid within the pressure sensor 100 are provided by welds. The pressure sensor 100 can thus be used with high to very high pressures, for example up to at least 500, 8000 or even 1,000 bar. Further, corrosive or damaging properties of the process fluid may not affect the reliability of the seals.

The pressure sensor 100 further comprises a pressure transfer assembly 30 that is provided by the sensor module housing 20 and flow channels 25 provided therein. The flow channels 25 are filled with a pressure transfer medium, such as a substantially incompressible liquid, such a oil, silicone oil or another pressure transfer fluid. A pressures exerted on the process diaphragm 25 (which may be a membrane) is transmitted via the pressure transfer fluid to the sensor element 50. The sensor element 50 is mounted to the sensor module housing 20. There may be a flow communication between a volume adjacent to the diaphragm 21 and a volume adjacent to the sensor element 50. The volume of the pressure transfer fluid is preferably kept small, so that these volumes may only be provided as thin films of the pressure transfer fluid.

The sensor module housing 20 provides a diaphragm bed 28 above which the diaphragm 21 is mounted. Accordingly, when a pressure is applied to the diaphragm 21 that exceeds the rated pressure range, the diaphragm can come to a rest on the membrane bed 28, thus preventing damage to diaphragm 21.

The volume in which the pressure transfer fluid is provided within the pressure sensor 100 is sealed by means of seals which comprise or consist of welds. In the example of figure 1, the diaphragm 21 is sealed to the sensor module housing 20 by the weld 42, and the sensor element 50 is sealed to the sensor module housing 20 by weld 45. Accordingly, high pressures that can prevail within the pressure transfer fluid can be confined reliably and effectively. In other embodiments, the sensor element 50 may be mounted directly to the adaptor housing 11 without an intermediate pressure transfer assembly 30.

The pressure may be measured by making use of one or more sensor units 71, 72 that are mounted to the back side of the sensor element 50, which is the side that is not exposed to the pressure applied by the process fluid or by the pressure transfer fluid, as seen in figure 1. The sensor units 71, 72 may for example each comprise a strain sensor element that measures strain caused by a deformation of the sensor element 50 due to the applied pressure. Several possibilities of detecting such strain exist. For example, in an optical detection, an optical fiber may be mounted to the back side of sensor element 50. Such fiber may include a Bragg grating the optical properties of which are changed upon deformation of the sensor element 50. In an electrical implementation, a conductor bridge may be applied to the backside of the sensor element 50, the resistance of which changes with deformation. In even other embodiments, a capacitive element may be attached to the back side of sensor element 50, the capacitance of which changes with stress applied to the sensor element 50.

Accordingly, the sensor unit 71, 72 provides a single that is indicative of the pressure applied to the sensor element 50, either directly by the process fluid or indirectly by the pressure transfer medium.

The pressure sensor 100 further comprises the electric unit 75 which receives such signals from the sensor units 71, 72, it may for example read out the sensor units 71, 72. The electric unit 75 is connected to a power line and to a data line (shown as line 81 in figure 1) for receiving electrical power and for transmitting a signal indicative of the pressure applied at the process interface 10. Electric unit 75 may provide electrical power to the sensor units 71, 72 and may receive an electrical signal from these units. It may in other configurations provide an optical signal to these units and may in turn receive an optical signal indicative of the applied pressure.

Preferably, at least two sensor units 71, 72 are provided. Similarly, the electronic unit 75 may comprises separate power supply and communication units for each of the sensor units 71, 72. Accordingly, a full redundancy for the pressure measurements may be achieved. Similarly, the lines 81 may also be fully redundant and may provide separate power supply and data communication for each of the sensor unit 71, 72. A high reliability may thus be achieved.

The sensor 100 may further comprise a sensor housing 61. In the example of figure 1, this is a pressure resistant subsea housing maintaining an about atmospheric internal pressure up to a deployment depth of at least 3,000m. An atmospheric chamber 62 is provided inside the sensor housing 61. Chamber 62 is filled with gas, in particular with nitrogen. Sensor units 71, 72 and the electric module 75 are disposed within chamber 62.

A penetrator 65 feeds the line 81 into the chamber 62 and seals the chamber. The penetrator 65 may for example comprise a glass to metal sealing, providing efficient sealing to high differential pressures and good insulating properties for electrical feed throughs.

A subsea cable 80 may extend from the pressure sensor 100. It should be clear that a connector or the like can be provided between the pressure sensor 100 and the subsea cable 80, such as a wet-mateable or dry-mateable subsea connector.

The sensor housing 61 is sealed to the adaptor housing 11 by a weld 49 in the embodiment of figure 1. Accordingly, an efficient second barrier is provided between the process fluid and the surrounding environment, which confines the process fluid upon failure of one of the welds 41, 42 or 45.

The parts 11, 12, 21, 20 may for example be made of metal, in particular steel. As an example, a high-grade steel, stainless steel or in particular alloy 625 may be used for these parts. Similarly, the parts 50 and 61 may be made of a high-grade steel. Sensor housing 61 may for example be made of Duplex stainless steel suitable for subsea deployment.

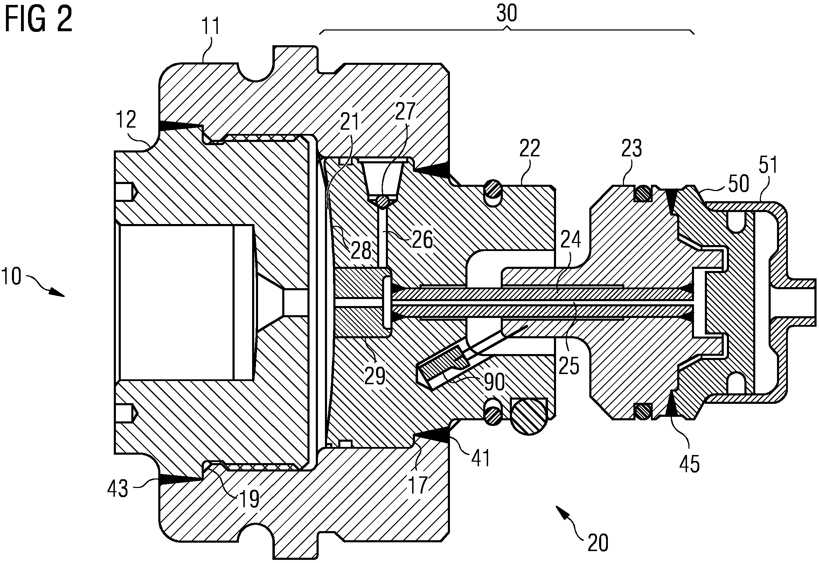

Figure 2 shows a particular embodiment of pressure sensor 100 of figure 1, so the above explanations are equally applicable. Only differences are described in more detail below.

In the embodiment of figure 2, the sensor module housing 20 which provides the pressure transfer assembly 30 comprises a diaphragm support housing 22 that provides the diaphragm bed 28 and to which the diaphragm 21 is welded. It further comprises the sensor support housing 23 to which the sensor element 50 is mounted. A housing section 24 connects the sensor support housing 23 to the diaphragm support housing 22, which are spaced apart and thereby provide reduced thermal conductivity.

The housing section 24 is provided in form of a cylindrical section with an inner flow channel 25 providing a flow connection for the pressure transfer fluid. In the embodiment of figure 2, the housing section 24 is provided by a pipe section that is welded into the sensor support housing 23 and the diaphragm support housing 22, thereby providing efficient confinement of the pressure transfer fluid up to high pressures.

As can be seen, the volumes under the sensor element 50 and under the process diaphragm 21 are kept relatively small. A cap 51 is provided over the sensor element 50, to protect the sensor units 71, 72 (not shown in figure 2) attached to the back side of sensor element 50.

A temperature probe 90 is further provided. The probe may be positioned so as to measure the temperature of the pressure transfer medium, for example by positioning the probe 90 in the diaphragm support housing 22. The probe 90 may be contacted electrically from the electric unit 75 within the chamber 62. Accordingly, pressure measurements can be compensated for expansion and contraction of the pressure transfer medium caused by temperature changes.

The pressure transfer assembly 30 comprises a port 26 in the diaphragm support housing 22. The port 26 may be located at a different position in other embodiments.

For assembling the pressure sensor 100, the pipe 24 may be welded to the sensor support housing 23. The Sensor element 50 may then be welded to the sensor support housing 23.

Further, the pipe 24 may be welded to the diaphragm support housing 22. Thereafter, the insert 29 may be inserted, and the diaphragm 21 may be welded to the diaphragm support housing 22. Accordingly, a compact sensor module housing 20 can be assembled efficiently.

The pressure transfer fluid may then be filled into the respective channels through the port 26. Prior or after the filling, all seals that are provided by welds can be tested for their integrity through the port 26. After filling, the port 26 can be sealed by a seal 27, which is provided by a ball that is welded to the opening to seal the port 26.

By such configuration and assembly method, a pressure transfer assembly 30 can be obtained that is sealed by fully tested and welded seals.

The other side of seal 27 is in flow communication with the process fluid that enters the pressure sensor 10 at the process interface 10. Accordingly, the pressure difference across the seal 27 can be kept low, so that only relatively small forces are experienced by the seal 27.

The adaptor housing 11 has a through bore into which the sensor module housing 20 is inserted. The sensor module housing 20 abuts the shoulder 17 provided in the through bore. Accordingly, forces resulting from the pressure applied by the process fluid to the sensor module housing 20 will be taken up by the shoulder 17. The sensor module housing 20 is the welded to the adaptor housing 11 (weld 41). The adaptor piece 12 can then be inserted into the adaptor housing 11, it rests on a shoulder 19 in the through bore. Adaptor piece 12 can then be welded to the adaptor housing 11 (weld 43). Accordingly, the region into which the process fluid can enter via the process interface 10 is efficiently and reliably sealed by welds.

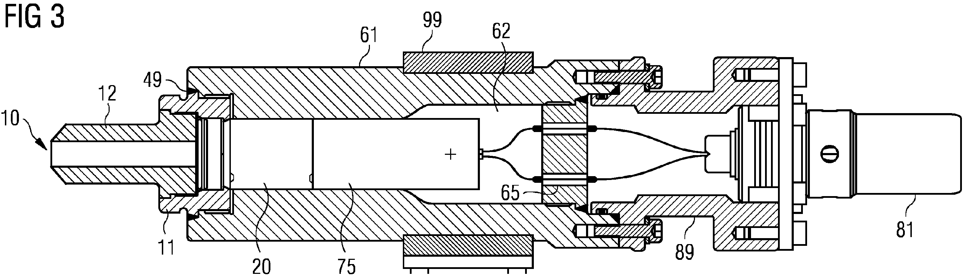

Figure 3 shows a pressure sensor 100 that includes the pressure sensor 100 of figure 2 (the sensor module housing 20 is only schematically shown in figure 3). The pressure sensor 100 further includes the sensor housing 61 providing the chamber 62 in which the electric unit 75 is disposed. The explanations given above with respect to figures 1 and 2 apply equally to the embodiment of figure 3.

Figure 3 illustrates the redundant electrical connections to redundant power and communication modules that connect to the redundant sensor units 71, 72 (not shown in figure 3). The penetrator 65 comprises respective feed-throughs. Weld 49 provides sealing for the inner chamber 62.

The pressure sensor 100 may for example be clamped to a subsea device or subsea line/pipe by means of a clamp 99. At reference numeral 89, a pressure compensated housing comprising a fitting for mounting a subsea cable 81 in form of an oil filled hose, or a connector part of a subsea connector may be provided. In other embodiments, the rear part of housing 61 may be mounted to a subsea device, e.g. via a bulkhead plate or the like.

While specific embodiments are disclosed herein, various changes and modifications can be made without departing from the scope of the invention. The present embodiments are to be considered in all respects as illustrative and non-restrictive, and all changes coming within the meaning and equivalency range of the appended claims are intended to be embraced therein.

## Claims

1. A pressure sensor, in particular for a subsea application, comprising:
- a process interface (10) for receiving a process fluid, the pressure sensor (100) being mountable at the process interface (10) to a process fluid carrying component; and
- at least two parts (11, 12, 20, 21) that are exposed to the process fluid when the process fluid is received at the process interface, wherein seals between the at least two parts (11, 12, 20, 21) that confine the process fluid within the pressure sensor comprise a weld (41, 42, 43).

2. The pressure sensor according to claim 1, wherein the at least two parts comprise a sensor module housing (20) providing support for a sensor element (50) of the pressure sensor and an adaptor housing (11), wherein the adaptor housing (11) is sealed to the sensor module housing by a weld (41).

3. The pressure sensor according to claim 2, wherein the adaptor housing (11) comprises a through-bore with a shoulder (17), wherein the sensor module housing (20) partly extends into the through bore and abuts the shoulder (17) such that a pressure applied by the process fluid presses the sensor module housing (20) against the shoulder (17).

4. The pressure sensor according to any of the preceding claims, wherein the at least two parts comprise at least an adaptor housing (11) and an adaptor piece (12), wherein the adaptor piece (12) is sealed to the adaptor housing (11) by a weld (43), wherein preferably, the adaptor piece comprises a connecting face (15) adapted to be welded to the process fluid carrying component.

5. The pressure sensor according to any of the preceding claims, wherein the at least two parts comprise a sensor module housing (20), wherein the pressure sensor further comprises a sensor element (50), wherein the sensor element is sealed to the sensor module housing by a weld (45), wherein preferably, the sensor element (50) provides separation between an environment to which the pressure of the process fluid is applied and an environment in which connections to the sensor element are provided.

6. The pressure sensor according to any of the preceding claims, wherein the pressure sensor (100) has no electrical or optical feed-through into the environment (18, 25) to which the process pressure of the process fluid is applied.

7. The pressure sensor according to any of the preceding claims, further comprising a process diaphragm (21), wherein the at least two parts comprise a sensor module housing (20) and wherein the process diaphragm (21) is welded to the sensor module housing (20), in particular to a diaphragm support housing (22) forming part thereof, wherein the process diaphragm (21) provides separation between the process fluid and a pressure transfer fluid inside the pressure sensor.

8. The pressure sensor according to any of the preceding claims, further comprising a pressure transfer assembly (30) for transferring a pressure applied by the process fluid to a sensor element (50) via a pressure transfer fluid.

9. The pressure sensor according to claim 8, wherein seals that seal the pressure transfer fluid within the pressure sensor are formed as welds (42, 45).

10. The pressure sensor according to claim 8 or 9, wherein the pressure transfer assembly (30) comprises a port (26) for filling the pressure transfer assembly with the pressure transfer fluid, wherein the port (26) is sealed by a seal (27), one side of the seal being exposed to the pressure transfer fluid, the other side of the seal being exposed to a pressure applied to the process interface.

11. The pressure sensor according to any of the preceding claims, wherein the at least two parts comprise a sensor module housing (20), wherein the sensor module housing comprises a diaphragm support housing (22) to which a process diaphragm is mounted and a sensor support housing (23) to which a sensor element is mounted, wherein the diaphragm support housing and the sensor support housing are spaced apart and are connected by a housing section (24), in particular a pipe section, providing a flow channel (25) for the pressure transfer fluid.

12. The pressure sensor according to any of the preceding claims, further comprising a temperature probe (90), wherein preferably, the temperature probe (90) is located in a sensor module housing (20), in particular in a diaphragm support housing (22) of the pressure sensor.

13. The pressure sensor according to any of the preceding claims, further comprising a sensor housing (61), wherein the sensor housing (61) is sealed against at least one of the at least two parts to provide an inner chamber (62) sealed against both the process fluid and an ambient medium, the sensor housing (61) comprising one or more penetrators (65) for leading an electrical and/or optical connection into the inner chamber and sealing the inner chamber (62), the sensor housing (61) providing a second barrier between the process fluid and the ambient medium surrounding the sensor housing (61).

14. The pressure sensor according to any of the preceding claims, further comprising a sensor element (50), the sensor element comprising at least two sensor units (71, 72), in particular at least two strain sensors mounted to the back of the sensor element, each sensor unit (71, 72) providing an output indicative of a pressure applied by the process fluid at the process interface (10).

15. A method of assembling a pressure sensor, preferably for a subsea application, comprising the steps of:
- providing a process interface (10) for receiving a process fluid, the pressure sensor being mountable to a process fluid carrying component at the process interface (10);
- providing at least two parts (11, 12, 20, 21) of the pressure sensor that are exposed to the process fluid when the process fluid is received at the process interface; and
- sealing the at least two parts (11, 12, 20, 21) by welding the at least two parts (11, 12, 20, 21) together so that seals that confine the process fluid within the pressure sensor comprise a weld (41, 42, 43).

16. The method according to claim 15, wherein providing the at least two parts comprises providing an adaptor housing (11) and a sensor module housing (20), the method further comprising:
- inserting the sensor module housing (20) into a through hole of the adaptor housing (11) such that the sensor module housing (20) rests on a shoulder (17) in the through hole;
- welding the sensor module housing (20) to the adaptor housing (11);
- inserting a adaptor piece (12) into the through hole so as to form a chamber between the sensor module housing (20) and the adaptor piece (12) in the adaptor housing (11); and
- welding the adaptor piece (12) to the adaptor housing (11).
